# EUROPÄISCHE PATENTSCHRIFT

(11) **EP 1 492 734 B1**
(45) Veröffentlichungstag und Bekanntmachung des Hinweises auf die Patenterteilung: **14.06.2006**
(21) Anmeldenummer: 03707994.4
(22) Anmeldetag: 02.04.2003
(51) Int. Cl.: C03B 33/02

(54) **VORRICHTUNG UND VERFAHREN ZUM TEILEN VON VERTIKALEN GLASPLATTEN**
DEVICE AND METHOD FOR DIVIDING VERTICAL GLASS PLATES
PROCEDE ET DISPOSITIF POUR DIVISER DES PLAQUES DE VERRE VERTICALES

(30) Priorität: 04.04.2002 EP 02405267
(43) Veröffentlichungstag der Anmeldung: 05.01.2005
(73) Patentinhaber: Bystronic Maschinen AG, CH-4922 Bützberg (CH)
(72) Erfinder: GFELLER, Hans, CH-4912 Aarwangen (CH); BRAUN, Irmgard, CH-5643 Sins (CH)
(74) Vertreter: AMMANN PATENTANWÄLTE AG BERN
(86) Internationale Anmeldenummer: PCT/CH2003/000218
(87) Internationale Veröffentlichungsnummer: WO 2003/084888

(56) Entgegenhaltungen:
- EP-A- 0 805 784
- EP-A- 1 172 189
- GB-A- 1 201 094
- US-A- 1 922 327
- US-A- 1 996 387
- PATENT ABSTRACTS OF JAPAN vol. 2000, no. 03, 30. März 2000 (2000-03-30) -& JP 11 343132 A (SONY CORP), 14. Dezember 1999 (1999-12-14)

## Beschreibung

Die Erfindung bezieht sich auf eine Vorrichtung zum Teilen von Glasplatten gemäss Oberbegriff des Anspruchs 1.

Die Erfindung bezieht sich ferner auf ein Verfahren gemäss Oberbegriff des Anspruchs 13.

Glasplatten werden bei bekannten Schneid- und Brech-Anlagen in der horizontalen Lage bearbeitet. Die Glasplattenrohlinge, welche in Zuschnitte der gewünschten Grösse geteilt werden, sind üblicherweise grossflächig. Typischerweise haben sie eine Länge von 600 cm und eine Breite von 321 cm. Die Arbeitsstationen müssen daher entsprechend ausgebildet sein, was sich aber nachteilig in Bezug auf die Platzerfordernisse auswirkt.

Es kommt dazu, dass die Glasplatten üblicherweise in vertikaler Lage gelagert werden, so dass zur Beschickung der bekannten Schneid- und Brech-Anlagen eine geeignete Beschickungsvorrichtung nötig ist, die ein Drehen der Glasplatte in die Horizontale ermöglicht. Dadurch wird eine rasche Beschickung erschwert. Auch erfordert das Drehen der Glasplatten eine vorsichtige Handhabung, um eine Beschädigung zu vermeiden.

Aus der europäischen Patentschrift EP-B1-805 784 ist eine Vorrichtung bekannt, mit welcher Glasplatten geritzt und gebrochen werden können, während sie im Wesentlichen vertikal stehend ausgerichtet sind. Zum Brechen eines Glasplattenteils entlang einer horizontal verlaufenden Schnittlinie ist eine Wendestation vorgesehen, mit welcher der Glasplattenteil um 90 Grad geschwenkt werden kann, so dass die Schnittlinie für den Brechvorgang vertikal ausgerichtet ist. Um Beschädigungen beim Schwenken zu vermeiden, ist jedoch eine vorsichtige Handhabung des Glasplattenteils erforderlich, was insbesondere bei grossen Glasplattenteilen umständlich ist. Es ist auch nachteilig, dass ein zusätzlicher Arbeitsvorgang und somit zusätzliche Bearbeitungszeit nötig ist und,der Glasplattenteil nach dem Schwenken neu ausgerichtet werden muss.

Das vertikale Schrieben von Glasscheiben ist aus den Patentschriften DE 295 20 283 U1 und EP 1 172 189 A2 bekannt.

Ausgehend von diesem Stand der Technik liegt der vorliegenden Erfindung die Aufgabe zu Grunde, eine Vorrichtung und ein Verfahren der jeweils eingangs erwähnten Art anzugeben, bei welcher bzw. welchem die Handhabung der Glasplatten insbesondere beim Teilen vereinfacht wird.

Diese Aufgabe wird erfindungsgemäss durch eine Vorrichtung gemäss Anspruch 1 bzw. durch ein Verfahren gemäss dem unabhängigen Verfahrensanspruch gelöst.

Die abhängigen Ansprüche geben bevorzugte Ausführungen an.

Die erfindungsgemässe Vorrichtung und das erfindungsgemässe Verfahren weisen folgende Vorteile auf:
(a) es wird bei der Bearbeitung eine platzsparende und einfache Handhabung der Glasplatten ermöglicht;
(b) die Beschickung der Anlage wird erleichtert;
(c) eine genaues Ausrichten der Glasplatten wird erleichtert.

Es sei vorgemerkt, dass in der folgenden Beschreibung und in den Patentansprüchen unter dem Begriff "Glasplatten" ganz allgemein Glas-enthaltende Platten verstanden werden sollen, wie z.B. einfache Glasscheiben, beschichtete Glasscheiben, Verbundglasscheiben (Glasscheiben mit einer dazwischenliegenden Kunststofffolie), mehrschichtige Verbundglasscheiben, Verbundsicherheitsglasscheiben, etc.

Die Erfindung wird im Folgenden anhand eines Ausführungsbeispiels unter Bezugnahme auf Figuren erläutert.

Es zeigt
Fig. 1 eine Vorderansicht der erfindungsgemässen Anlage,
Fig. 2 eine vergrösserte Darstellung der Schneid- und Brechstation sowie einer weiteren Brechstation gemäss Fig. 1,
Fig. 3 einen Schnitt entlang des unteren Teils der Schneid-und Brechstation gemäss Fig. 2,
Fig. 4 einen Schnitt entlang des unteren Teils der Brechstation gemäss Fig. 2 und
Fig. 5 ein Beispiel einer mit Ritzlinien versehenen Glasplatte.

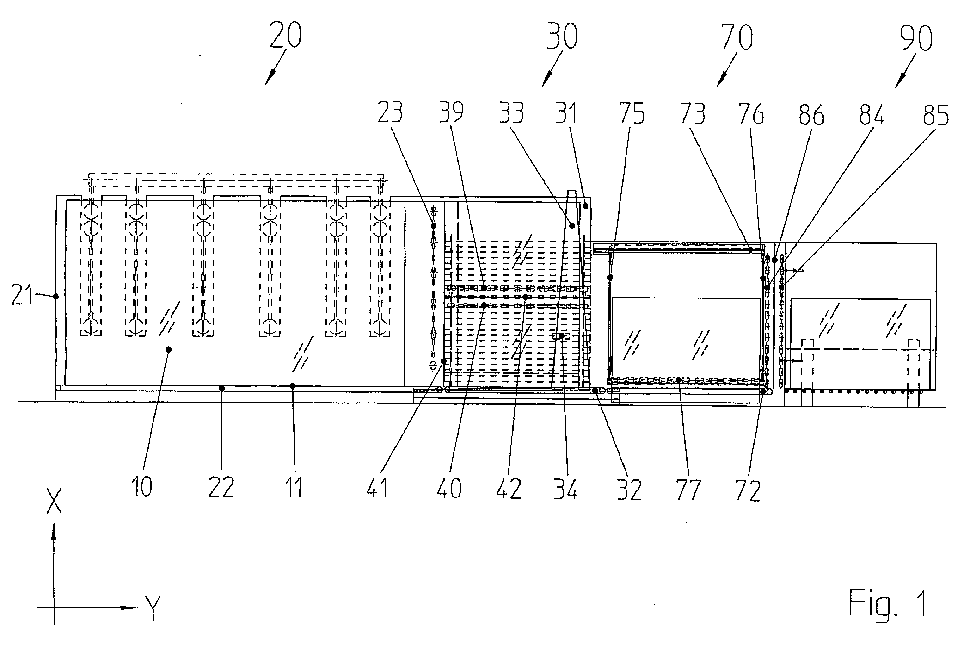

Die in Fig. 1 dargestellte Anlage zum Bearbeiten von Glasplatten umfasst mehrere Stationen: eine Zuführstation 20, eine Schneid- und Brechstation 30, eine weitere Brechstation 70 und eine Nachbearbeitungsstation 90.

Die Anlage ist als sogenannte Traverenmaschine ausgelegt, d.h. die Glasplatte wird in y-Richtung streifenweise (traverenweise) abgearbeitet. Dies bringt eine hohe Flexibilität bei der Verarbeitung insbesondere von verschiedenartigen Glasplatten mit sich.

Die Zuführstation 20 weist eine erste Auflagefläche 21 auf, welche die zu bearbeitende Glasplatte 10 stützt. Die erste Auflagefläche 21 ist im Wesentlichen vertikal ausgerichtet, so dass der Winkel (im Folgenden mit alpha bezeichnet) zwischen der ersten Auflagefläche 21 und der Vertikalen vorzugsweise im Bereich von 0 bis 10 Grad liegt.

Die Glasplatten werden üblicherweise im Wesentlichen lotrecht z. B. auf Glasgestellen gelagert, wobei der Neigewinkel etwa 5 bis 7 Grad beträgt. Vorzugsweise wird der Winkel alpha ähnlich wie der Neigewinkel der gelagerten Glasplatten gewählt, so dass zur Beschickung der Zuführstation 20 die Glasplatten lediglich translatorisch verschoben werden müssen und nicht gekippt zu werden brauchen.

Die erste Auflagefläche 21 kann als Luftkissenwand oder Rollenwand ausgebildet sein, über welche die zu bearbeitende Glasplatte 10 gleiten kann. Am unteren Ende der Zuführstation 20 ist ein erstes Transportband 22 vorgesehen, welches in horizontaler Richtung (im Folgenden auch y-Richtung genannt) zur Schneid- und Brechstation 30 führt.

Bei der Beförderung der Glasplatte 10 liegt diese mit einer ihrer Kanten 11 auf dem Transportband 22 auf und gleitet mit ihrer Rückseite über die Rollen bzw. dem Luftkissen der ersten Auflagefläche 21 hinweg, während die Vorderseite der Glasplatte 10 von vorne frei zugänglich ist.

Am rechten Ende der Zuführstation 20 ist eine erste vertikale Saugleiste 23 angebracht. Die Saugleiste 23 ist entlang einer im Wesentlichen vertikal verlaufenden Linie mit einer Vielzahl von Saugern ausgestattet, welche von hinten auf die Rückseite der zu bearbeitenden Glasplatte aufgebracht werden und mit dieser mittels Unterdruck lösbar verbunden werden können.

Die der Zuführstation 20 folgende Schneid- und Brechstation 30 weist eine zweite Auflagefläche 31 auf, die in einer Flucht mit der ersten Auflagefläche 21 ist. Anschliessend an das erste Transportband 22 ist am unteren Ende der Schneid-und Brechstation 30 ein zweites Transportband 32 vorgesehen.

Auf der Vorderseite der zweiten Auflagefläche 31 ist eine in y-Richtung verfahrbare Schneidbrücke 33 positioniert. Diese ist mit einem Schneidwerkzeug (Schneidrad oder Laser) versehen, welches in x-Richtung verfahrbar ist und zusätzlich eine Drehachse zur Drehung des Schneidwerkzeuges aufweisen kann. Mittels des Schneidwerkzeuges ist die Vorderseite der Glasplatte mit Ritzlinien versehbar, entlang welchen sie dann in die einzelnen Teile der gewünschten Grösse gebrochen wird. Nebst rechteckigen Formen können mittels des Schneidwerkzeuges auch freie Formen geritzt werden. Die Schneidbrücke 33 kann noch mit weiteren Werkzeugen zur Bearbeitung der Glasplatte ausgestattet sein, die vorzugsweise in x-Richtung verfahrbar sind und zusätzlich eine Drehachse aufweisen können. So ist z. B. denkbar, eine Schleifeinrichtung vorzusehen, um z. B. die Schicht einer beschichteten Glasplatte an bestimmten Stellen abtragen zu können, oder eine Bohreinrichtung, um die Glasplatte an bestimmten Stellen mit einem Loch versehen zu können.

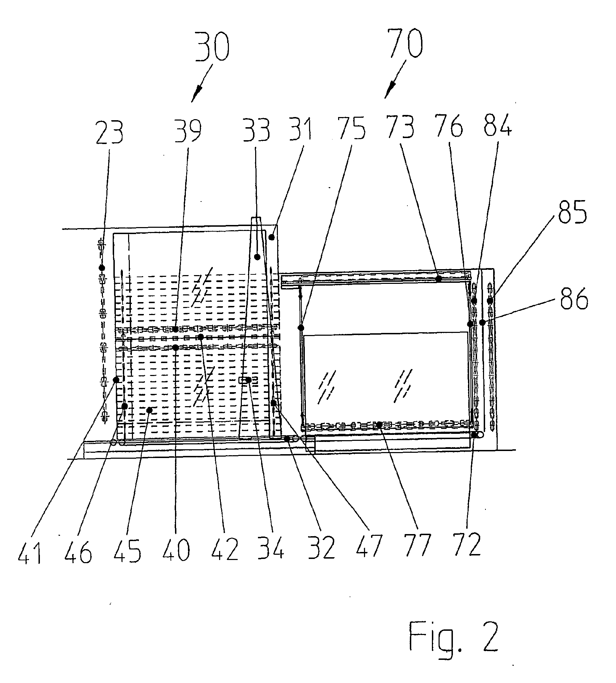

Wie auf Fig. 2 schematisch angedeutet ist, ist die Schneidbrücke mit einer Zange 34 ausgestattet, mit welcher eine Glasplatte an ihrem rechten Rand ergreifbar ist und durch Verschiebung der Schneidbrücke 33 in y-Richtung genau positionierbar ist.

Die zweite Auflagefläche 31 der Schneid- und Brechstation 30 ist mit einer ersten horizontalen Saugleiste 39 und vorzugsweise mit einer zweiten horizontalen Saugleiste 40 versehen. Die beiden Saugleisten 39 und 40 sind ähnlich wie die erste vertikale Saugleiste 23 mit einer Vielzahl von Saugern versehen, um sie mit der Glasplatte lösbar verbinden zu können.

Zwischen der ersten vertikalen Saugleiste 23 und dem linken Ende der beiden horizontalen Saugleisten 39 und 40 ist ein erster vertikaler Brechbalken 41 angebracht. Dieser kann von hinten auf die Rückseite der Glasplatte angebracht werden, um diese entlang einer vertikalen Ritzlinie zu brechen (sogenannter "X-Schnitt").

Zwischen den beiden horizontalen Saugleisten 39 und 40 ist ein erster horizontaler Brechbalken 42 angebracht, mit welchem die Glasplatte bzw. ein Teil davon entlang einer horizontalen Ritzlinie gebrochen werden kann (sogenannter "Y-Schnitt").

Der erste horizontale Brechbalken 42 und die beiden horizontalen Saugleisten 39 und 40 sind in der x-Richtung verfahrbar gelagert, um die Glasplatte bzw. ein Teil davon entlang einer beliebigen horizontal verlaufenden Ritzlinie brechen zu können. Die beiden horizontalen Saugleisten 39 und 40 dienen auch dazu, die Glasplatte bzw. den oberen Teil der geteilten Glasplatte zu halten und diesen absenken zu können.

Wie in Fig. 2 durch die gestrichelten Linien dargestellt, ist die zweite Auflagefläche 31 im Wesentlichen über ihre ganze Breite mit einer Vielzahl von Leisten 45 versehen. Die Leisten 45 sind zusammen mit dem ersten horizontalen Brechbalken 42 und mit den beiden horizontalen Saugleisten 39 und 40 jeweils am linken und rechten Randbereich der Schneid- und Brechstation 31 miteinander auf einer vertikal verlaufenden Kette 46 und 47 verbunden und bilden so zusammen eine Art Rollladen, der in x-Richtung verfahrbar ist.

Die Leisten 45 bestehen aus einem festen Material, z. B. Metall, so dass die zweite Auflagefläche 31 eine feste Wand bildet, welche die Glasplatte entsprechend stützt. So wird gewährleistet, dass der Druck, welcher das Schneidwerkzeug auf die Vorderseite der Glasplatte beim Schneiden ausübt, durch die zweite Auflagefläche 31 aufgefangen wird und der Bereich des Glases um die Ritzlinien nicht durch zu hohe Spannungen beschädigt wird.

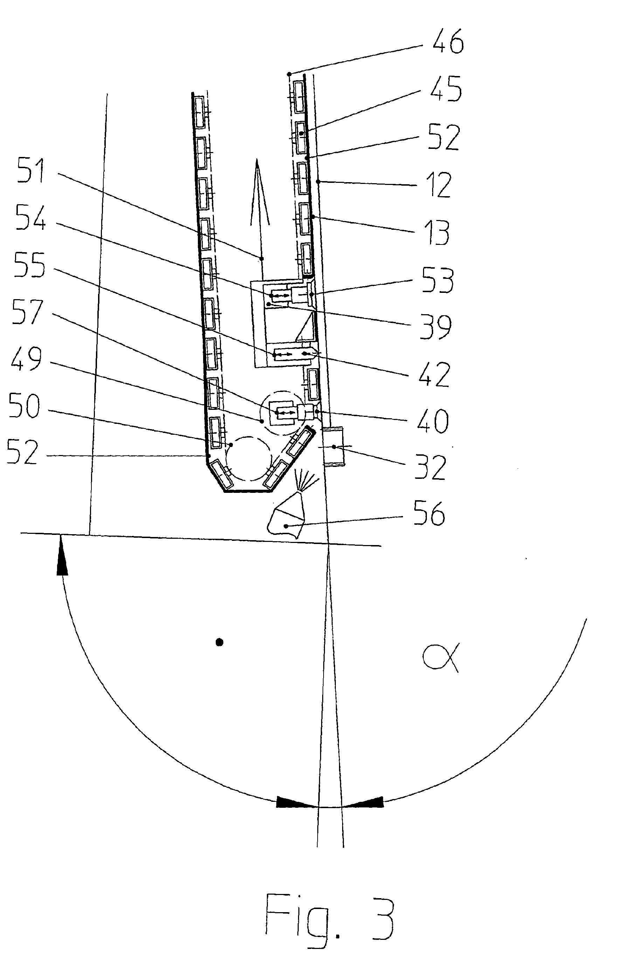

Fig. 3 zeigt einen Schnitt des unteren Teils der Schneid-und Brechstation 30. Wie oben beschrieben, liegt die Glasplatte mit ihrer Rückseite auf der zweiten Auflagefläche 31 auf. Diese ist im Wesentlichen vertikal ausgerichtet, so dass der Winkel alpha zwischen der Vertikalen und der zweiten Auflagefläche vorzugsweise im Bereich von 0 bis 10 Grad liegt.

Die einzelnen Leisten 45 sind gelenkig auf den Ketten 46 und 47 angebracht, welche im unteren Bereich der Schneid- und Brechstation jeweils durch zwei Rollen 49 und 50 umgelenkt werden. Ähnlich sind zum Umlenken der Ketten 46 und 47 im oberen Bereich der zweiten Auflagefläche 31 zwei weitere (nicht dargestellte) Rollen vorgesehen.

Weiter sind die Leisten 45 mit einer beweglichen Auflagematte 52 überzogen, welche z. B. aus einem Gewebeband besteht, das vorzugsweise mit Kunststoff beschichtet ist. Die Auflagematte 52 erstreckt sich im Wesentlichen über die ganze Breite der Leisten 45, so dass die Glasplatte 12 beim Ritzen auf dieser aufliegt.

Wird wie in Fig. 3 durch den Pfeil 51 dargestellt, der erste horizontale Brechbalken 42 zusammen mit den beiden horizontalen Saugleisten 39 und 40 in vertikaler Richtung nach oben verfahren, so werden die Leisten laufend um die Rollen umgelenkt und tauchen vorne auf. Wie dies in Fig. 3 durch die Doppelpfeile 54, 55 und 57 angedeutet ist, sind die jeweiligen Saugerköpfe 53 auf der ersten horizontalen Saugleiste 39, die Saugerköpfe auf der zweiten horizontalen Saugleiste 40 und der Brechbalken 42 quer zur Oberfläche der Glasplatte 12 verschiebbar, um zu verhindern, dass sie beim Verfahren die Rückseite 13 der Glasplatte 12 streifen.

Am unteren Ende der Schneid- und Brechstation 30 ist eine Vielzahl von Luftdüsen 56 entlang einer horizontalen Richtung angebracht. Mittels diesen lässt sich Luft zwischen die Auflagematte 52 und die Glasplatte 12 blasen. Da die Auflagematte 52 eine luftdichte Fläche bildet, strömt die Luft dabei zwischen der Auflagematte 52 und der Glasplatte 12 von unten nach oben und erzeugt so ein Luftkissen, auf welchem der untere Teil der Glasplatte 12 nach dem Y-Brechen beim Transport zur Brechstation 70 hinweggleiten kann.

Wie in Fig. 2 ersichtlich ist anschliessend an die Schneid-und Brechstation 30 die weitere Brechstation 70 vorgesehen. Fluchtend mit dem zweiten Transportband 32 ist am unteren Ende der Brechstation 70 ein drittes Transportband 72 angeordnet. Die Brechstation 70 ist mit einem vierten Transportband 73 versehen, das, geführt durch eine linke und rechte Schiene 75 bzw. 76, in der x-Richtung verfahrbar ist. Je nach Breite des abgeschnittenen Teils der Glasplatte wird das vierte Transportband 73 auf der entsprechenden Höhe positioniert, so dass die Glasplatte darüber gleiten kann. Die Brechstation 70 ist mit einer dritten horizontalen Saugleiste 77 versehen.

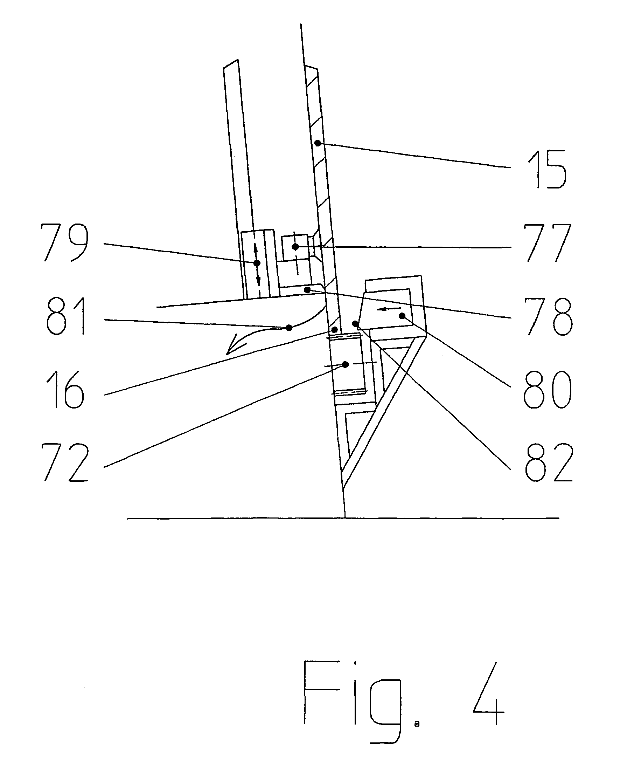

Wie Fig. 4 zeigt, ist die Saugleiste 77 an ihrem unterem Ende mit einer Gegendruck-Leiste 78 ausgestattet und wie dies durch den Doppelpfeil 79 angedeutet ist, entlang der Vertikalen verfahrbar. Auf der Vorderseite der Glasplatte 15 ist ein zweiter horizontaler Brechbalken 80 angebracht.

Die Brechvorrichtung 77, 78 und 80 wird verwendet, um gegebenenfalls einen Streifen des unteren Randes der Glasplatte 15 (die sogenannte "Y-Borte") abzubrechen. (Da die Glasplattenrohlinge üblicherweise keine sauberen Kanten aufweisen, ist es nötig, den Randstreifen zu entfernen.)

Zum Abbrechen der Y-Borte wird die dritte horizontale Saugleiste 77 in x-Richtung so verfahren, dass die Gegendruck-Leiste 78 auf der entsprechenden Ritzlinie der Y-Borte zu liegen kommt. Der zweite horizontale Brechbalken 80 wird dann von vorne gegen die Vorderseite der Glasplatte 15 gedrückt, so dass schliesslich die Y-Borte abbricht und, wie dies durch den Pfeil 81 angedeutet ist, nach hinten hinunterfällt.

Wie aus Fig. 4 ersichtlich ist, weist der zweite horizontale Brechbalken 80 einen keilartigen Querschnitt auf, wobei die vordere Kante 82 möglichst Nahe am Rand 16 der Glasplatte 15 angreifen vermag. Dadurch wird gewährleistet, dass die Distanz zwischen der Gegendruck-Leiste 78 und der vorderen Kante 82 des zweiten horizontalen Brechbalkens 80 möglichst gross ist und so eine möglichst grosses Biegemoment beim Brechen erzielt wird.

Beim Brechen der Y-Borte hält die dritte horizontale Saugleiste 77 die Glasplatte 15 in ihrer Position fest und wird nach dem Entfernen der Y-Borte zusammen mit der Glasplatte 15 nach unten verfahren, so dass diese mit der neu gebrochenen Kante auf dem dritten Transportband 72 zu liegen kommt.

Optional kann zum Abbrechen der Y-Borte am oberen Rand der Glasplatte 15 eine weitere Brechvorrichtung entlang des vierten Transportbandes 73 vorgesehen sein, die ähnlich der Brechvorrichtung 77, 78 und 80 ist und in x-Richtung verfahrbar ist.

Zum Brechen der Glasplatte entlang einer weiteren vertikalen Ritzlinie (sogenannter "Z-Schnitt") weist die Brechstation 70 am Ende des dritten Transportbandes 72 eine zweite vertikale Saugleiste 84 und dritte vertikale Saugleiste 85 sowie einen zweiten vertikalen Brechbalken 86 auf. Diese Brechvorrichtung 84, 85 und 86 ermöglicht es nebst den Z-Schnitten, gegebenenfalls einen Streifen des linken bzw. rechten Randes der Glasplatte (die sogenannte "X-Borte") zu entfernen.

Im Anschluss an die Brechstation 70 kann wie in Fig. 1 dargestellt, eine Nachbearbeitungsstation 90 vorgesehen sein. Diese kann z. B. einen Kipptisch umfassen, um die Glasplatte für eine manuelle Bearbeitung in die horizontale Lage kippen zu können.

Die Glasplatten-Teile werden dann am Ende der Anlage z.B. auf Glasgestelle abgestellt, (manuell oder automatisch) in Fächerwagen einsortiert, in einem Zwischenpuffer zwischengelagert oder direkt einer weiteren Bearbeitungslinie zugeführt.

Mit der erfindungsgemässen Anlage lässt sich folgendes Verfahren durchführen:

Die zu bearbeitende Glasplatte wird z. B. von einem Glasgestell oder Traverenspender mittels einer Beschickungsvorrichtung der Zuführstation 20 zugeführt.

Mittels des ersten Transportbandes 22 wird die Glasplatte zur Schneid- und Brechstation 30 befördert und mit der Zange 34 auf der zweiten Auflagefläche 31 entlang der y-Richtung positioniert, so dass der erste vertikale Brechbalken 41 und die für den X-Schnitt vorgesehene vertikale Ritzlinie übereinander zu liegen kommen.

Die erste vertikale Saugleiste 23 und die beiden horizontalen Saugleisten 39 und 40 werden auf die Glasplatte aufgebracht und halten diese mittels Unterdruck fest.

Die Glasplatte oder ein Teil davon wird dann mit dem Schneidwerkzeug geschnitten. Optional kann die Glasplatte vor dem Brechen noch durch weitere Arbeitsschritte bearbeitet werden, wie z. B. Bohren oder Schleifen.

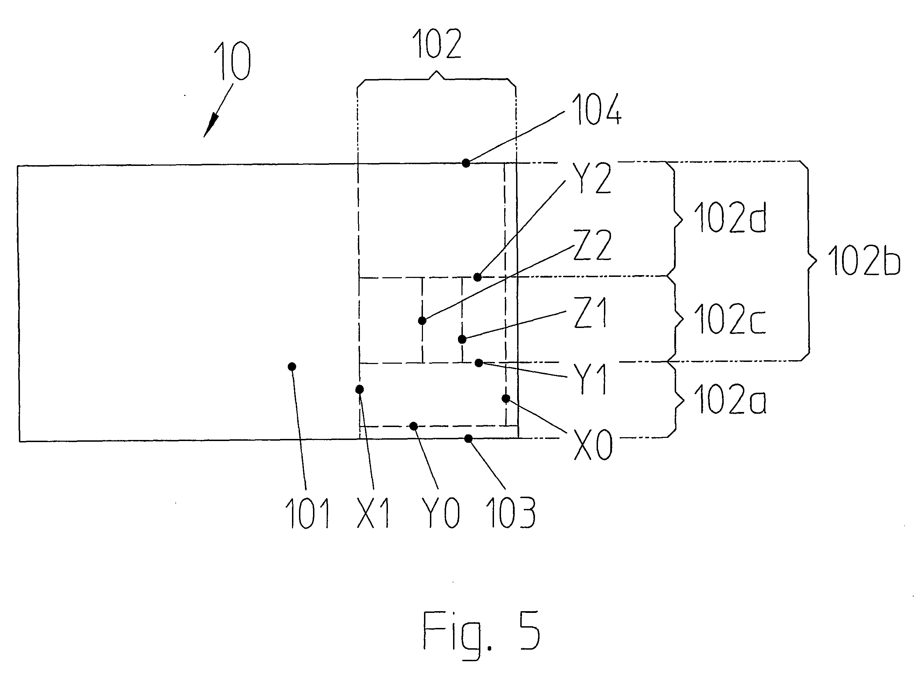

Fig. 5 zeigt ein Beispiel, bei welchem der rechte Teil 102 der Glasplatte 10 (sogenannte "Travere") mit den Ritzlinien X0, X1, Y0, Y1, Y2, Z1 und Z2 versehen ist. Im Folgenden sollen der Einfachheit halber die weiteren Arbeitsschritte anhand von Fig. 5 genauer erläutert werden, wobei jedoch diese nur ein mögliches Beispiel darstellt, die Glasplatte zu trennen. Es versteht sich von selbst, dass je nach gewünschter Unterteilung der Glasplatte die verschiedenen Arbeitsschritte entsprechend angepasst werden.

Nach dem Schneiden wird die Glasplatte 10 mittels des ersten vertikalen Brechbalkens 41 entlang der X1-Linie in zwei Teile 101 und 102 gebrochen.

Im nächsten Arbeitsschritt wird der erste horizontale Brechbalken 42 in x-Richtung verfahren, so dass er auf der Höhe der Ritzlinie Y1 zu liegen kommt. Dann werden die beiden horizontalen Saugleisten 39 und 40 mittels Unterdruck fest mit der Travere 102 verbunden und dann etwas noch oben verfahren, so dass zwischen der unteren Kante 103 der Travere 102 und dem zweiten Transportband 32 ein kleiner Zwischenraum entsteht, der beispielsweise in der Grössenordnung der Dicke der Glasplatte 10 liegt.

Zum Brechen wird der erste horizontale Brechbalken 42 gegen die Travere 102 vorgeschoben, wobei die beiden horizontalen Saugleisten 39 und 40 die Travere 102 entgegenhalten, bis sie schliesslich in zwei Teile 102a und 102b bricht.

Wie oben beschrieben, wird die Travere 102 vor dem Brechen etwas angehoben, so dass die untere Kante 103 nicht auf dem zweiten Transportband 32 aufliegt und daher relativ frei bewegbar ist. Zusätzlich wird die Separation des unteren Teils 102a vom oberen Teil 102b durch die Schwerkraft unterstützt, so dass ein sauberer Bruch entlang der Y1-Linie resultiert.

Während des Brechvorgangs wird mit der Luftdüse 56 zwischen der Auflagematte 52 und der Glasplatte 12 ein Luftkissen erzeugt. Dadurch können Kratzer auf der Glasplatte vermieden werden. Die strömende Luft begünstigt auch, dass die beim Brechvorgang entstehenden Glassplitter weggeblasen werden. Nach dem Brechvorgang wird die zweite horizontale Saugleiste 40 vom Teil 102a gelöst, so dass dieser zurück auf das zweite Transportband 32 hinunterrutscht. Dabei wird wegen des Luftkissens die Bildung von Kratzern auf der Glasplatte 12 vermieden. Die erste horizontale Saugleiste 39 hält dabei immer noch den oberen Teil 102b in seiner Position fest.

Beim Brechen von Verbundglas mit einer Folie kann es zur vollständigen Trennung der beiden Teile noch nötig sein, die Folie mechanisch mit einer Klinge oder thermisch mittels Wärmezufuhr zu durchtrennen.

Der untere Teil 102a wird dann zur nächsten Brechstation 70 befördert, wo im Beispiel gemäss Fig. 5 die Y-Borte entlang der Ritzlinie Y0 mittels des zweiten horizontalen Brechbalkens 80 abgebrochen wird, wie dies bereits oben beschrieben wurde. Das mittels der Luftdüse 56 zwischen der Auflagematte 52 und der Glasplatte 12 erzeugte Luftkissen vermeidet während des Abtransportes des unteren Teils 102a, dass dieser mit unerwünschten Kratzern versehen wird.

Schliesslich wird mittels des zweiten vertikalen Brechbalkens 86 die X-Borte entlang der Ritzlinie X0 abgebrochen und der restliche Teil via die Nachbearbeitungsstation 90 aus der Anlage ausgeschleust.

Der obere Teil 102b wird, nachdem der untere Teil 102a zur Brechstation 70 befördert wurde, mittels der ersten horizontalen Saugleiste 39 auf das zweite Transportband 32 abgesenkt. Analog der Verfahrensschritte zum Brechen der Travere 102 entlang der Y1-Linie, wird der Teil 102b gemäss Fig. 5 entlang der Ritzlinie Y2 in zwei Teile 102c und 102d getrennt.

Nachfolgend wird dann bei der Brechstation 70 der Teil 102c gemäss Fig. 5 entlang der Ritzlinien X0, Z1 und Z2 in weitere Teile getrennt. Schliesslich wird der Teil 102d zur Brechstation befördert und gemäss Fig. 5 durch Brechen entlang der Ritzlinie X0 die X-Borte entfernt.

Analog wie oben beschrieben, wird der Rest 101 der Glasplatte 10 in verschiedene Teile getrennt.

Die zugeschnittenen Teile werden dann der weiteren Bearbeitung oder einem Zwischenlager zugeführt.

Die Verwendung einer horizontalen Brechvorrichtung nebst vertikalen Brechvorrichtungen erlaubt es, die ursprüngliche Orientierung der Glasplatte bzw. der davon abgetrennten Teile beizubehalten. Somit kann vermieden werden, dass insbesondere die abgetrennten Teile rotiert werden müssen, was eine Verkürzung der Bearbeitungszeit mit sich bringt. Die Glasplattenteile werden lediglich translatorisch horizontal und gegebenenfalls vertikal verschoben, wodurch die Handhabung vereinfacht wird und u. a. auch die Gefahr, die Kanten zu beschädigen, verringert wird.

Die Brechvorrichtungen und Saugleisten greifen jeweils von hinten auf die Rückseite der Glasplatte an, so dass ihre Vorderseite unberührt bleibt. Dadurch kann die Gefahr vermindert werden, dass z. B. die Schicht bei beschichteten Glasscheiben beschädigt wird.

Im Weiteren wird durch die vertikale Anordnung der Anlage erreicht, dass die Glasplatte durch ihr Eigengewicht auf dem Transportband aufliegt, welches somit bei jeder Station eine Referenzebene für die Ausrichtung der Glasplatte liefert. Es braucht daher keine Anschläge zum Positionieren der Glasplatte, wie sie bei bekannten horizontal angeordneten Anlagen verwendet werden.

Aus der vorangehenden Beschreibung sind dem Fachmann zahlreiche Abwandlungen zugänglich, ohne den Schutzbereich der Erfindung zu verlassen, der durch die Ansprüche definiert ist.

So kann es, je nach Einsatzbereich der Anlage, vorteilhaft sein, den Winkel alpha, welcher die Auflagefläche gegenüber der Vertikalen aufweist, im Bereich von 0 bis 10 Grad oder im Bereich von 0 bis 45 Grad zu wählen. Die Wahl eines kleinen Winkels hat den oben beschriebenen Vorteil, dass die Glasplatten direkt von einem Glasgestell oder Traverenspender ohne zusätzliches Kippen übernommen werden können. Jedoch bewahrt man sich auch bei einem grösseren Winkel alpha, den Vorteil, dass die Anlage seitlich weniger ausgedehnt ist als die bekannten Anlagen, bei welchen die Glasplatten in der Horizontalen geschnitten werden.

Zum Brechen der Glasplatte kann anstelle eines Brechbalkens auch eine Art Rolle oder Kugel verwendet werden, welche mit einem bestimmten Druck entlang der Ritzlinie geführt wird.

Im Weiteren kann anstelle der ersten horizontalen Saugleiste 39 eine Zange oder eine geeignete Greifvorrichtung benutzt werden, um den oberen Teil der Travere (Teil 102b in Fig. 5) seitlich oder im oberen Randbereich beim Brechen festzuhalten. Um die Travere anzuheben oder den angeschnitten Teil abzusenken, ist die Zange bzw. Greifvorrichtung in x-Richtung verfahrbar.

Es ist auch denkbar, die zweite horizontale Saugleiste 40 wegzulassen. Da die Glasplatte beim Brechen etwas geneigt gegenüber der Vertikalen ist, wirkt ihr Eigengewicht dem Druck des Brechbalkens entgegen, so dass ein Kippen der Glasplatte nach vorne verhindert wird.

Weiter ist es auch denkbar, die Schneid- und Brechstation 30 als getrennte Stationen auszubilden, so dass eine Glasplatte zuerst beispielsweise bei der Zuführstation 20 geritzt und dann der Station 30 zum Brechen entlang der Ritzlinien übergeben wird. Da demnach die zweite Auflagefläche 31 nicht als feste Wand beim Schneiden benötigt wird, kann sie ähnlich wie bei der Brechstation 70 gestaltet sein, sodass die geritzte Glasplatte beim Brechen beispielsweise lediglich an den Rändern gestützt ist.

### Bezugszeichenliste

- 10: Glasplatte
- 11: untere Kante der Glasplatte 10
- 12: Glasplatte bei der Schneid- und Brechstation 30
- 13: Rückseite der Glasplatte 12
- 15: Glasplatte bei der Brechstation 70
- 16: unterer Rand der Glasplatte 15
- 20: Zuführstation
- 21: erste Auflagefläche
- 22: erstes Transportband
- 23: erste vertikale Saugleiste
- 30: Schneid- und Brechstation
- 31: zweite Auflagefläche
- 32: zweites Transportband
- 33: Schneidbrücke
- 34: Zange
- 39: erste horizontale Saugleiste
- 40: zweite horizontale Saugleiste
- 41: erster vertikaler Brechbalken
- 42: erster horizontaler Brechbalken
- 45: Leiste
- 46: linke Kette
- 47: rechte Kette
- 49: Rolle
- 50: Rolle
- 51: Verfahrrichtung der Saugleiste 39 nach oben
- 52: Auflagematte
- 53: Saugerkopf
- 54: Richtung, in welche Saugkopf 53 verschiebbar ist
- 55: Richtung, in welche der erste horizontale Brechbalken verschiebbar ist
- 56: Luftdüse
- 57: Richtung, in welche der Saugkopf auf der Saugleiste 40 verschiebbar ist
- 70: Brechstation
- 72: drittes Transportband
- 73: viertes Transportband
- 75: linke Schiene
- 76: rechte Schiene
- 77: dritte horizontale Saugleiste
- 78: Gegendruck-Leiste
- 79: Richtung, in welche die dritte horizontale Saugleiste verfahrbar ist
- 80: zweiter horizontaler Brechbalken
- 81: Richtung, in welche die abgebrochene Borte der Glasplatte 15 fällt
- 82: vordere Kante des zweiten horizontalen Brechbalkens
- 84: zweite vertikale Saugleiste
- 85: dritte vertikale Saugleiste
- 86: zweiter vertikaler Brechbalken
- 90: Nachbearbeitungsstation
- 101: linker Teil der Glasplatte 10
- 102: rechter Teil (Travere) der Glasplatte 10
- 102a: unterer Teil der Travere 102
- 102b: oberer Teil der Travere 102
- 102c: unterer Teil des Teils 102b
- 102d: oberer Teil des Teils 102b
- 103: untere Kante der Travere 102
- 104: obere Kante der Travere 102

- alpha: Winkel zwischen der Auflagefläche der Glasplatte und der vertikalen
- x: vertikale Achse
- y: horizontale Achse
- X0: vertikale Ritzlinie zum Abbrechen der X-Borte (X-Nullschnitt-Linie)
- X1: vertikale Ritzlinie
- Y0: horizontale Ritzlinie zum Abbrechen der Y-Borte (Y-Nullschnitt-Linie)
- Y1, Y2: horizontale Ritzlinien
- Z1, Z2: vertikale Ritzlinien

## Patentansprüche

1. Vorrichtung (30, 70) zum Teilen einer Glasplatte mit einer Auflagefläche (31, 52, 73) zum Stützen der Glasplatte in einer im Wesentlichen vertikalen Lage, **gekennzeichnet durch**
mindestens eine horizontale Brechvorrichtung (39, 40, 42) zum Brechen der Glasplatte (102, 102b) entlang einer im Wesentlichen horizontal verlaufenden Linie (Y1, Y2).

2. Vorrichtung gemäss Anspruch 1, **dadurch gekennzeichnet, dass** sie weiter mindestens eine vertikale Brechvorrichtung (23, 41, 84, 85, 86) umfasst zum Brechen der Glasplatte (10, 102, 102a-d) entlang einer im Wesentlichen vertikal verlaufenden Linie (X0, X1, Z1, Z2).

3. Vorrichtung gemäss Anspruch 1 oder 2, **dadurch gekennzeichnet, dass** die horizontale Brechvorrichtung (39, 40, 42) in der vertikalen Richtung verfahrbar ist.

4. Vorrichtung gemäss einem der Ansprüche 1 bis 3, **dadurch gekennzeichnet, dass** die horizontale Brechvorrichtung (39, 40, 42) mindestens einen Brechbalken (42) umfasst.

5. Vorrichtung gemäss einem der Ansprüche 1 bis 4, **dadurch gekennzeichnet, dass** sie Festhaltemittel (39) umfasst, mit welchen die Glasplatte (102, 102b) oberhalb der im Wesentlichen horizontal verlaufenden Linie (Y1, Y2) festgehalten werden kann.

6. Vorrichtung nach Anspruch 5, **dadurch gekennzeichnet, dass** die Festhaltemittel (39) in die Auflagefläche (31) integriert sind und zusammen mit der Auflagefläche (31) in der vertikalen Richtung verfahrbar sind.

7. Vorrichtung nach einem der Ansprüche 1 bis 6, **dadurch gekennzeichnet, dass** die Auflagefläche (31) gelenkig angebrachte Leisten (45) umfasst.

8. Vorrichtung nach einem der Ansprüche 5 bis 7, **dadurch gekennzeichnet, dass** die Festhaltemittel (39) Sauger (53) umfasst, die mittels Unterdruck auf die Glasplatte (13) anbringbar sind.

9. Vorrichtung nach einem der Ansprüche 1 bis 8, **dadurch gekennzeichnet, dass** sie eine weitere horizontale Brechvorrichtung (77, 78, 80) mit einem Brechbalken (80) umfasst, der ein keilartiges Profil aufweist.

10. Vorrichtung nach einem der Ansprüche 1 bis 9, **dadurch gekennzeichnet, dass** sie eine Vielzahl von Luftdüsen (56) umfasst zur Erzeugung eines Luftkissens zwischen der Auflagefläche (52) und der Glasplatte (12).

11. Vorrichtung nach einem der Ansprüche 1 bis 10, **dadurch gekennzeichnet, dass** sie Transportmittel (22, 32, 42) umfasst zum horizontalen Verschieben der Glasplatte (10) bzw. davon abgetrennte Teile (102, 102a-d).

12. Anlage (20, 30, 70, 90) zum Bearbeiten von Glasplatten mit einer Vorrichtung nach einem der Ansprüche 1 bis 11.

13. Verfahren zum Teilen einer sich in einer im Wesentlichen vertikalen Lage befindenden Glasplatte (102, 102b), **dadurch gekennzeichnet, dass** sie an einer Brechstation (30) entlang einer ersten Linie (Y1, Y2) gebrochen wird, die beim Brechvorgang im Wesentlichen horizontal verläuft.

14. Verfahren nach Anspruch 13, **dadurch gekennzeichnet, dass** die Glasplatte (102, 102b), bevor sie entlang der ersten Linie (Y1, Y2) gebrochen wird, in vertikaler Richtung angehoben wird.

15. Verfahren nach einem der Ansprüche 13 bis 14, **dadurch gekennzeichnet, dass** die Glasplatte (102, 102b) bei der Brechstation (30) in einen oberen Teil (102b, 102d) und einen unteren Teil (102a, 102c) geteilt wird, dann der untere Teil (102a, 102c) von der Brechstation (30) weggeführt wird und dann der obere Teil (102b, 102d) entweder entlang einer zweiten im Wesentlichen horizontal verlaufenden Linie (Y2) gebrochen wird oder von der Brechstation (30) weggeführt wird.

16. Verfahren nach einem der Ansprüche 13 bis 15, **dadurch gekennzeichnet, dass** die Glasplatte (10) zuerst entlang einer vertikal verlaufenden Linie (X1) in einen linken Teil (101) und einen rechten Teil (102) geteilt wird, und dann der rechte Teil (102) entlang der ersten Linie (Y1) gebrochen wird.

17. Verfahren nach einem der Ansprüche 13 bis 16, **dadurch gekennzeichnet, dass** an der Brechstation (30) abgebrochene Teile (102a, 102c, 102d) einer weiteren Brechstation (70) zugeführt werden, wo sie entlang einer horizontalen Linie (Y0) und/oder vertikalen Linie (X0, Z1, Z2) gebrochen werden.

18. Verfahren nach einem der Ansprüche 13 bis 17, **dadurch gekennzeichnet, dass** die Glasplatte (102, 102b) der Brechstation (30) seitlich zugeführt wird.

19. Verfahren nach einem der Ansprüche 13 bis 18, **dadurch gekennzeichnet, dass** die von der Glasplatte (10) abgebrochenen Teile (102, 102a, 102c, 102d) innerhalb der Brechstation (30) ausschliesslich translatorisch befördert werden und dann translatorisch von der Brechstation (30) weggeführt werden.

## Claims

1. Device (30, 70) for dividing a glass plate, comprising a supporting surface (31, 52, 73) for supporting the glass plate in an essentially vertical position, **characterised by**
at least one horizontal breaking device (39, 40, 42) for breaking the glass plate (102, 102b) along a line (Y1, Y2) that extends essentially horizontally.

2. Device according to claim 1, **characterised in that** it further comprises at least one vertical breaking device (23, 41, 84, 85, 86) for breaking the glass plate (10, 102, 102a-d) along a line (X0, X1, Z1, Z2) that extends essentially vertically.

3. Device according to claim 1 or 2, **characterised in that** the horizontal breaking device (39, 40, 42) is displaceable in the vertical direction.

4. Device according to one of claims 1 to 3, **characterised in that** the horizontal breaking device (39, 40, 42) includes at least one breaking bar (42).

5. Device according to one of claims 1 to 4, **characterised in that** it comprises holding means (39) allowing to hold the glass plate (102, 102b) above the essentially horizontally extending line (Y1, Y2).

6. Device according to claim 5, **characterised in that** the holding means (39) are integrated in the supporting surface (31) and are displaceable together with the supporting surface (31) in the vertical direction.

7. Device according to one of claims 1 to 6, **characterised in that** the supporting surface (31) comprises bars (45) that are attached in an articulated manner.

8. Device according to one of claims 5 to 7, **characterised in that** the holding means (39) comprise suction devices (53) that are connectable to the glass plate (13) by partial vacuum.

9. Device according to one of claims 1 to 8, **characterised in that** it comprises another horizontal breaking device (77, 78, 80) provided with a breaking bar (80) having a wedge-shaped profile.

10. Device according to one of claims 1 to 9, **characterised in that** it comprises a multiple of air nozzles (56) for generating an air cushion between the supporting surface (52) and the glass plate (12).

11. Device according to one of claims 1 to 10, **characterised in that** it comprises conveyor means (22, 32, 42) for horizontally displacing the glass plate (10) resp. portions (102, 102a-d) that have been separated therefrom.

12. Installation (20, 30, 70, 90) for processing glass plates with a device according to one of claims 1 to 11.

13. Method for dividing a glass plate (102, 102b) that is in an essentially vertical position, **characterised in that** it is broken at a breaking station (30) along a first line (Y1, Y2) that extends essentially horizontally during the breaking process.

14. Method according to claim 13, **characterised in that** the glass plate (102, 102b), before being broken along the first line (Y1, Y2), is lifted in the vertical direction.

15. Method according to one of claims 13 to 14, **characterised in that** the glass plate (102, 102b) is divided at the breaking station (30) into an upper portion (102b, 102d) and a lower portion (102a, 102c), then the lower portion (102a, 102c) is removed from the breaking station (30) and then the upper portion (102b, 102d) is either broken along a second line (Y2) that extends essentially horizontally or is removed from the breaking station (30).

16. Method according to one of claims 13 to 15, **characterised in that** the glass plate (10) is first divided into a left-hand portion (101) and a right-hand portion (102) along a vertically extending line (X1) and then the right-hand portion (102) is broken along the first line (Y1).

17. Method according to one of claims 13 to 16, **characterised in that** portions (102a, 102c, 102d) that have been broken off at the breaking station (30) are supplied to a further breaking station (70) where they are broken along a horizontal line (Y0) and/or a vertical line (X0, Z1, Z2).

18. Method according to one of claims 13 to 17, **characterised in that** the glass plate (102, 102b) is supplied to the breaking station (30) laterally.

19. Method according to one of claims 13 to 18, **characterised in that** the portions (102, 102a, 102c, 102d) broken off from the glass plate (10) are transported exclusively translationally inside the breaking station (30) and are then removed translationally from the breaking station (30).

## Revendications

1. Dispositif (30, 70) pour diviser une plaque de verre, comprenant une surface d'appui (31, 52, 73) pour soutenir la plaque de verre en une position essentiellement verticale, **caractérisé par**
au moins un dispositif de rompage horizontal (39, 40, 42) pour rompre la plaque de verre 102, 102b) le long d'une ligne (Y1, Y2) qui s'étend essentiellement horizontalement.

2. Dispositif selon la revendication 1, **caractérisé en ce qu'**il comprend en outre au moins un dispositif de rompage vertical (23, 41, 84, 85, 86) pour rompre la plaque de verre (10, 102, 102a-d) le long d'une ligne (X0, X1, Z1, Z2) qui s'étend essentiellement verticalement.

3. Dispositif selon la revendication 1 ou 2, **caractérisé en ce que** le dispositif de rompage horizontal (39, 40, 42) est déplaçable en direction verticale.

4. Dispositif selon l'une des revendications 1 à 3, **caractérisé en ce que** le dispositif de rompage horizontal (39, 40, 42) comprend au moins une barre de rompage (42).

5. Dispositif selon l'une des revendications 1 à 4, **caractérisé en ce qu'**il comprend des moyens de retenue (39) permettant de retenir la plaque de verre (102, 102b) au-dessus de ladite ligne (Y1, Y2) qui s'étend essentiellement horizontalement.

6. Dispositif selon la revendication 5, **caractérisé en ce que** les moyens de retenue (39) sont intégrés dans la surface d'appui (31) et sont déplaçables en direction verticale conjointement avec la surface d'appui (31).

7. Dispositif selon l'une des revendications 1 à 6, **caractérisé en ce que** la surface d'appui (31) comprend des barres (45) articulées.

8. Dispositif selon l'une des revendications 5 à 7, **caractérisé en ce que** les moyens de retenue (39) comprennent des ventouses (53) applicables à la plaque de verre (13) par vide partiel.

9. Dispositif selon l'une des revendications 1 à 8, **caractérisé en ce qu'**il comprend un dispositif de rompage (77, 78, 80) supplémentaire avec une barre de rompage (80) présentant un profil cunéiforme.

10. Dispositif selon l'une des revendications 1 à 9, **caractérisé en ce qu'**il comprend une multitude de buses d'air (56) pour la création d'un coussin d'air entre la surface d'appui (52) et la plaque de verre (12).

11. Dispositif selon l'une des revendications 1 à 10, **caractérisé en ce qu'**il comprend des moyens de transport (22, 32, 42) pour le déplacement horizontal de la plaque de verre (10) ou de parties 102, 102a-d) séparées de celle-ci, respectivement.

12. Installation (20, 30, 70, 90) pour le traitement de plaques de verre comprenant un dispositif selon l'une des revendications 1 à 11.

13. Procédé de rompage d'une plaque de verre (102, 102b) qui se trouve en une position essentiellement verticale, **caractérisé en ce qu'**elle est rompue à une station de rompage (30) le long d'une première ligne (Y1, Y2) qui s'étend essentiellement horizontalement pendant l'opération de rompage.

14. Procédé selon la revendication 13, **caractérisé en ce que** la plaque de verre (102, 102b), avant d'être rompue le long de la première ligne (Y1, Y2), est soulevée en direction verticale.

15. Procédé selon l'une des revendications 13 à 14, **caractérisé en ce que** la plaque de verre (102, 102b) est divisée à la station de rompage (30) en une partie supérieure (102b, 102d) et une partie inférieure (102a, 102c), puis la partie inférieure (102a, 102c) est enlevée de la station de rompage (30) et puis la partie supérieure (102b, 102d) est soit rompue le long d'une deuxième ligne (Y2) qui s'étend essentiellement horizontalement, soit enlevée de la station de rompage (30).

16. Procédé selon l'une des revendications 13 à 15, **caractérisé en ce que** la plaque de verre (10) est d'abord divisée le long d'une ligne (X1) qui s'étend verticalement en une partie gauche (101) et une partie droite (102), et que la partie droite (102) est ensuite rompue le long de la première ligne (Y1).

17. Procédé selon l'une des revendications 13 à 16, **caractérisé en ce que** des parties (102a, 102c, 102d) détachées à la station de rompage (30) sont amenées à une station de rompage (70) supplémentaire où elles sont rompues le long d'une ligne horizontale (Y0) et/ou une ligne verticale (X0, Z1, Z2) .

18. Procédé selon l'une des revendications 13 à 17, **caractérisé en ce** la plaque de verre (102, 102b) est amenée latéralement à la station de rompage (30).

19. Procédé selon l'une des revendications 13 à 18, **caractérisé en ce que** les parties (102, 102a, 102c, 102d) détachées de la plaque de verre (10) sont transportées de manière translatoire exclusivement à l'intérieur de la station de rompage (30) et puis enlevées de manière translatoire de la station de rompage (30).
